# EUROPEAN PATENT APPLICATION

(11) **EP 1 059 237 A1**
(43) Date of publication of application: **13.12.2000**
(21) Application number: 99110872.1
(22) Date of filing: 07.06.1999
(51) Int. Cl.: B65D 23/10, B29C 49/48

(54) **Improved food package and method**

(71) Applicant: Graham Engineering Corporation, York Pennsylvania 17405 (US)
(72) Inventor: Spohr, Joseph A., York, Pennsylvania 17402 (US)
(74) Representative: von Samson-Himmelstjerna, Friedrich R., Dipl.-Phys.

(57) **Abstract**

A food package (10) includes an integral blow molded plastic tall bottle (12) having a hollow body and a sterilized dairy product substantially filling the body. The bottle (12) includes a vertical tubular handle (40) spaced away from the body. The ends (46, 48) of the handle (40) are attached to the body by pinch seals (52, 54) which close off the interior (44) of the handle (40) and separate the interior (44) of the handle (40) from the interior of the body.

## Description

The invention relates to food packages, particulary blow molded plastic bottles containing a sterilized dairy product.

Blow molded plastic bottles with handles are known from U.S. Patents Nos. 5,087,406 (corresponds to European Patent No. 548 423), 5,392,950, 5,188,849, 5,232,107 and 5,366,103.

A conventional food package includes a tall plastic milk bottle containing sterilized milk. The bottles may be square or round in cross-section. The plastic milk bottle must be cleaned prior to being filled with milk. The interior of the empty bottle is cleaned using a fluid cleaning medium such as a liquid disinfectant or steam. The cleaning medium wets the interior walls of the bottle, accumulates inside the bottle and must be completely removed from the bottle before the bottle is filled. The bottle may be rinsed a number of times to remove the cleaning medium and prevent milk contamination.

Conventional tall plastic milk bottles do not have handles and must be bodily grasped for moving and pouring. Tubular open ended handles are not provided because during cleaning the cleaning medium lodges in the interior of the handle. Removal of the cleaning medium from vertically oriented handles formed in tall bottles is extremely difficult. There is no assurance that all of the cleaning medium can be removed. Milk flowing into the handles can be contaminated by cleaning medium remaining in the handle. Contaminated milk is unmarketable.

Nevertheless, it is desirable that a plastic blow molded tall milk bottle have a handle. The handle provides for convenient holding and pouring of the milk from the bottle. The handle should be spaced from the body to provide a convenient opening for the hand and facilitate manual gripping of the bottle. The handle should be integrally blow-molded with the remainder of the bottle, and should be a tubular, hollow handle formed from thin walled plastic to reduce material cost.

Thus, there is a need for a food package including an integral blow molded plastic bottle having a tall body and an elongate tubular plastic handle blow molded to one side of the body, the handle spaced from the body to facilitate manual gripping of the bottle, and a sterilized dairy product in the body.

The invention is a food package including an integral blow molded tall plastic bottle having a hollow body filled with a sterilized dairy product, therein the improvement comprises an integral elongate and vertical tubular plastic handle spaced to one side of the body having upper and lower ends joined to the body by integral plastic pinch seals. The pinch seals completely close off the interior handle and physically separate the interior of the handle from the interior of the bottle. A pourable sterile dairy product, typically milk, substantially fills the interior of the bottle and extends above the seal at the bottom of the handle.

The empty tall bottle is sterilized using a fluid cleaning medium prior to being filled with the food product. The cleaning medium wets and cleans the interior of the body. The pinch seals prevent the cleaning medium in the body from entering and accumulating in the handle. The cleaning medium does not flow into the handle and is easily and completely removed from the bottle. The problem of cleaning the interior of a hollow handle is eliminated by the pinch seals, which prevent cleaning medium from entering the handle.

The improved food package has a number of advantages over conventional food packages for dairy products. The plastic tubular handle provides easier and more convenient manual gripping of the bottle and pouring of the sterilized dairy product from the bottle. The interior of the handle does not have to be cleaned prior to filling the bottle with dairy products. The pinch seals at the top and bottom of the handle prevent flow of dairy product from the body into the handle. The seals also prevent any contamination that may accumulate in the handle from flowing into the body to contaminate the food product. The bottle can be integrally blow molded with thin walls to maintain low production cost.

Other objects and features of the invention will become apparent as the description proceeds, especially when taken in conjunction with the accompanying drawings illustrating the invention, of which there are two sheets.

In the drawings:
Figure 1 is a side view of a food package in accordance with the present invention;
Figure 2 is a vertical sectional view of the food package shown in Figure 1;
Figures 3 and 4 are sectional views taken along lines 3-3 and 4-4 of Figure 2; and
Figure 5 is a schematic illustration showing cleaning, filling and sterilization of the food package of Figure 1.

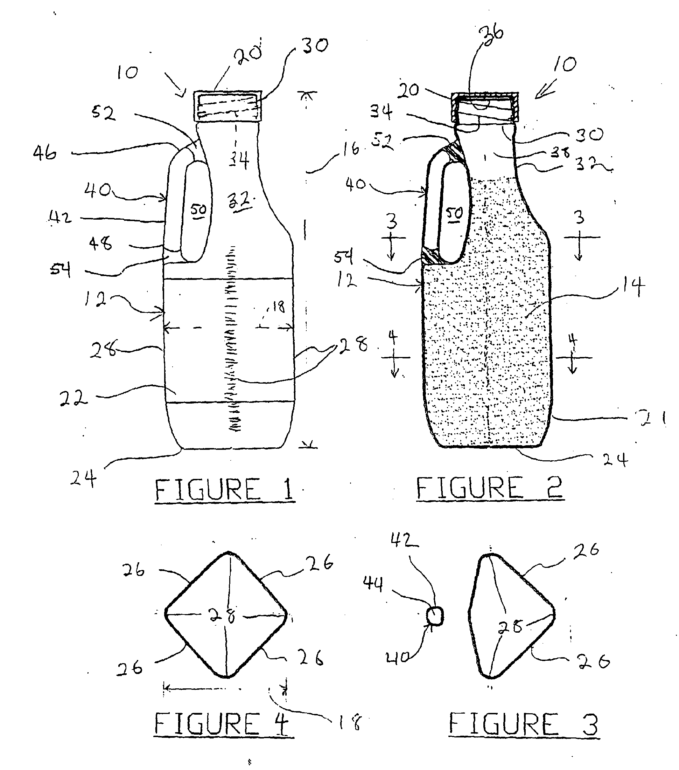

Figures 1-4 illustrate a food package 10 in accordance with the present invention. Package 10 includes an integral blow-molded plastic tall bottle 12 containing sterilized milk 14. Bottle 12 is typically sized to contain from between about 1 to about 5 liters of sterilized milk. The bottle 12 has a tall configuration with a height 16 greater than twice its maximum transverse dimension 18. A removable closure or cap 20 seals the bottle. A label 22 is attached to and surrounds the bottle 12 as shown.

Plastic bottle 12 is blow-molded from a stiff, high density polyethylene, preferably a homopolymer resin having a flex modulus of about 1,650,000 kPa (240,000 pounds per square inch) and a specific density not less than about 0.96. If desired, other plastics may be used.

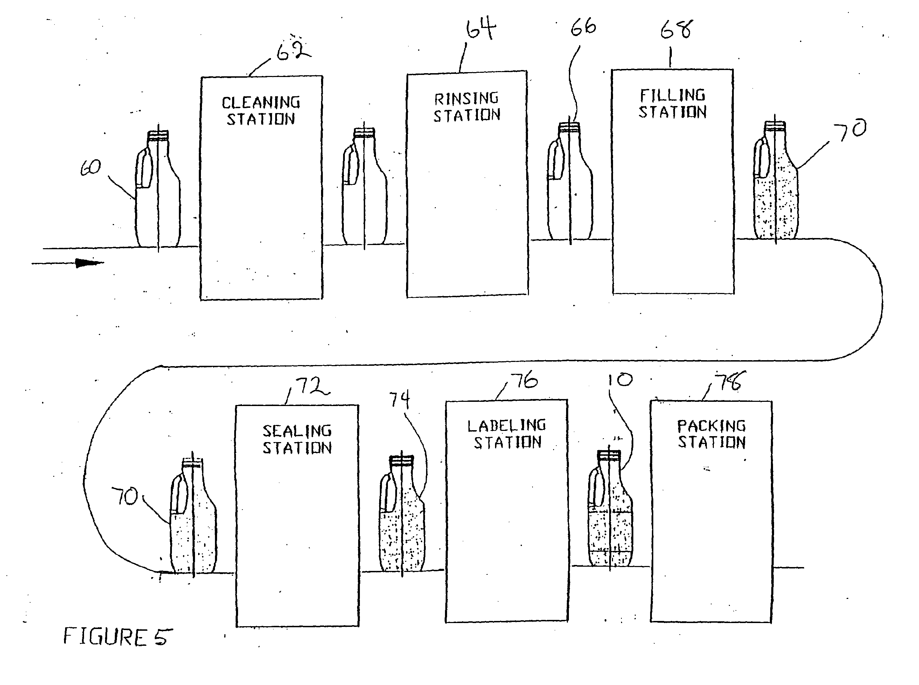

Bottle 12 includes square base 24 and four flat side panels 26 extending above the base. The side panels are joined at corners 28. Filling and pouring neck 30 is located at the top of the bottle and is joined to the tops of the panels by tapered shoulder 32. A thread 34 is formed on the neck to engage cap 20. If desired, an adhesive, tamper evident foil closure 36 may be applied to the top of the neck, under the cap. Disclosed bottle 12 has flat side panels, corners and a square coss-section shown in Figure 4. If desired, the bottle may be rounded or cylindrical in cross-section.

The walls of the bottle preferably have a thickness of between about 0.203 mm (0.008 inches) and about 1.016 mm (0.040 inches), with an average wall thickness of about 0.381 mm (0.015 inches). The interior of the bottle is sterilized with a fluid cleaning medium prior to being filled with milk. Milk 14 substantially fills the interior of the body, with an unfilled body interior portion or head space 38 between the top of the milk and the cap. Plastic bottle 12 includes an elongate hollow handle 40 integrally molded in the bottle and extending vertically above a corner 28. Handle 40 includes a tubular sidewall 42 defining a hollow interior 44 extending between an upper end 46 and a lower end 48 of the handle. The upper end joins shoulder 32. The lower end joins a corner 28. The thickness of handle sidewall 42 varies between about 0.508 mm (0.020 inches) and about 1.270 mm (0.050 inches). Each end 46, 48 is integrally joined to bottle body 21. The handle is spaced away from the bottle body to provide a hand grip space 50 between the handle and the bottle body for receiving a hand of a consumer gripping handle 40.

Plastic pinch seals 52 and 54 completely close off the upper and lower ends of the handle and physically separate the hollow interior of the handle from the hollow interior of the body. Each pinch seal is integral with the remainder of the bottle. The pinch seals assure that during cleaning of the bottle before filling all of the cleaning medium is confined in the interior of the bottle and may be easily rinsed or cleaned from the bottle in exactly the same way cleaning medium is cleaned from conventional blow molded bottles which do not have handles. After the bottle is filled with milk, the milk engages the inner surface of the lower pinch seal 54. The seal prevents milk from flowing into the interior of the handle. The upper pinch seal 52 likewise prevents milk from flowing into the handle.

Figure 5 illustrates a preferred method of manufacturing food package 10. An empty plastic milk bottle 60 like the bottle 12 shown in Figure 1 is moved to a bottle cleaning station 62. The interior of the bottle is washed with a fluid cleaning medium, preferably a liquid disinfectant or steam, to clean and sterilize the interior of the bottle. The cleaning medium wets the interior of the bottle and the inner surfaces of the pinch seals 52 and 54. The pinch seals prevent the cleaning medium from flowing into the interior 44 of the handle.

After cleaning and sterilization of the bottle, the bottle is moved to a bottle rinsing station 64 to remove the accumulated cleaning medium from the interior of the body. The bottle may be rinsed one or more times as needed to assure the removal of cleaning medium from the interior of the bottle. Pinch seals 52, 54 prevent the wash or rinse medium from entering the interior of the handle. Rinsing removes all of the cleaning medium from the interior of the bottle.

The clean, sterilized empty bottle 66 is moved to a filling station 68, where the bottle is charged with a predetermined amount of sterilized milk. Milk is flowed through the neck of the bottle and substantially fills the bottle. The milk contacts lower pinch seal 54. Pinch seal 54 prevents the milk from flowing into the interior of the handle.

After charging the bottle with milk, the filled bottle 70 is moved to a sealing station 72. A cap is threaded onto the neck of the bottle to seal the bottle. If desired, a tamper evident foil seal 36 may be placed over and close the neck prior to attaching the cap. In order to maintain sterility of the milk in the bottle, the filling station 68 and sealing station 72 may be located in a clean room.

The filled and sealed bottle 74 is then moved to a labeling station 76 where a label is attached to the bottle to form the completed food package 10. Food package 10 then moves to a packing station 78 where the package 10 is packed in a container for shipment to a customer. The sealed sterilized milk in the bottle may be kept at room temperature and has a long shelf life.

## Claims

1. A food package (10) comprising an integral blow molded plastic tall bottle (12) having a hollow body with a filling and pouring neck (30) at the top of the body, a hollow body interior, a dairy product substantially filling the interior of the body, and a removable closure (20, 36) sealing the neck (30), the bottle (12) having a height (16) greater than twice the maximum transverse dimension (18) of the bottle (12) and a wall thickness of between about 0.203 mm and about 1.016 mm, wherein the improvement comprises an elongate tubular plastic handle (40) blow molded with the body, the handle (40) having upper and lower ends (46, 48) extending vertically between the upper and lower ends thereof and along and spaced outwardly from the body of the bottle (12) to facilitate manual gripping of the handle (40) the upper and lower ends (46, 48) integrally joined to the body, the handle (40) defining a hollow handle interior (44) extending between the ends (46, 48), and an integral plastic pinch seal (52, 54) at each end (46, 48) of the handle (40), each pinch seal (52, 54) completely closing off the interior (44) of the handle (40) and physically separating the interior (44) of the handle (40) from the interior of the body to prevent flow therebetween, said dairy product contacting the seal (54) at the lower end (48) of the handle (40), said hollow interior of the bottle (12) and the dairy product in the bottle (12) being sterile.

2. The food package (10) of claim 1 wherein said plastic bottle (12) is formed from a high density polyethylene.

3. The food package (10) of claim 2 wherein said high density polyethylene is formed from a homopolymer resin having a specific density not less than about 0.96.

4. The food package (10) of any preceding claim wherein said hollow body of said plastic bottle (12) includes vertical panels (26).

5. The food package (10) of any preceding claim wherein said handle (40) has a wall thickness of between about 0.508. mm and about 1.270 mm.

6. The food package (10) of any preceding claim wherein said body is rectangular and includes a bottom, flat side panels (26) and corners (28), and a tapered shoulder (32) located between said neck (30) and the top of said panels (26) and corners (28), the pinch seal (52) at the top of the handle (40) joining said shoulder (32), and the pinch seal (54) at the bottom of the handle (40) joining one corner (28).

7. The food package (10) of any preceding claim numbers 1 through 5 wherein said bottle (12) is cylindrical and has a generally circular cross-section.

8. The food package (10) as in any preceding claim wherein said food product comprises milk (14).

9. A method of manufacturing a food package (10) comprising the steps of:
providing an integral blow molded plastic tall bottle (12, 60) having a hollow body with a filling and pouring neck (30) at the top of the body;
sterilizing the interior of the body with a fluid cleaning medium, the fluid cleaning medium wetting the interior of the body;
removing the fluid cleaning medium from the interior of the body to form an empty sterilized plastic bottle (12, 66);
charging the empty sterilized plastic bottle (12, 66) with a sterilized dairy product by flowing the dairy product through said filling and pouring neck (30) and substantially filling the interior of the body;
sealing the neck (30) of said bottle (12, 70) with a removable closure (20, 36);
wherein the improvement comprises providing said blow molded bottle (12, 60, 66, 70, 74) with an elongate hollow handle (40) blow molded with the body and extending vertically along the bottle (12, 60, 66, 70, 74), said handle (40) spaced away from said body and having opposed upper and lower ends (46, 48) integrally joined to the body; and
providing physical barriers located at the ends (46, 48) of the handle (40) and at the interior of the body to physically separate the interior of the body from the interior (44) of the handle (40) .

10. The method of claim 9, including the steps of providing pinch seals (52, 54) integrally formed in the bottle plastic at the ends (46, 48) of the handle (40).

11. The method of claim 10, including the steps wetting at least one of the pinch seals (52, 54) with the fluid cleaning medium and with the dairy product.

12. The method of any preceding claim numbers 9 through 11 including the step of sterilizing the interior of the bottle (12, 60) with a liquid disinfectant or steam.

13. The method of any preceding claim numbers 9 through 12 including the step of filling the bottle (12, 60, 66) with milk (14).
